# EUROPÄISCHE PATENTSCHRIFT

(11) **EP 0 361 351 B1**
(45) Veröffentlichungstag und Bekanntmachung des Hinweises auf die Patenterteilung: **03.04.1996**
(21) Anmeldenummer: 89117639.8
(22) Anmeldetag: 25.09.1989
(51) Int. Cl.: C08J 5/12, C08J 7/04, B05D 3/06, C09J 5/00, C09J 7/02

(54) **Aufbringen einer lackierten Folie auf einen dreidimensionalen Gegenstand**
Application of a painted film to a three-dimensional object
Dépôt d'une pellicule laquée sur un objet tridimensionnel

(30) Priorität: 27.09.1988 CH 3574/88
(43) Veröffentlichungstag der Anmeldung: 04.04.1990
(73) Patentinhaber: CIBA-GEIGY AG, CH-4002 Basel (CH)
(72) Erfinder: Godwin, Berner, Dr., CH-4102 Binningen (CH); Ljubomir, Misev, Dr., CH-4226 Breitenbach (CH)
(74) Vertreter: Zumstein, Fritz, Dr.

(56) Entgegenhaltungen:
- EP-A- 0 251 546
- DE-A- 3 314 729
- US-A- 3 552 986
- F.W. Billmeyer, Textbook of Polymer Science, 3. Auflage, John Wiley & Sons, New York 1984, Seiten 82-85 und 474

## Beschreibung

Die Erfindung betrifft ein Verfahren zum Aufbringen einer lackierten Folie auf einen dreidimensionalen Gegenstand, insbesondere den Verfahrensschritt des Aufbringens des Lackes auf die Folie.

In der DE-A-3314729 ist die Elektronenstrahlhärtung von selbstklebenden Kunststofffolien, die auf der nichtklebenden Seite mit einer klebstoffabweisenden Schutzschicht versehen sind, beschrieben.

In der EP-A 251 546 ist ein Verfahren zum Beschichten von Automobilteilen mit einer lackierten Folie beschrieben. Dabei wird die eine Seite der Folie mit einem farbigen Lack beschichtet, der thermisch ausgehartet wird. Die andere Seite der Folie wird mit einem wärmeaktivierbaren Klebstoff beschichtet. Die so beidseitig beschichtete Folie wird dann erwärmt bis sie genügend weich für das Tiefziehen ist. Die heisse Folie wird dann durch Vakuum auf den Automobilteil aufgebracht, wobei der Klebstoff die Folie an das Substrat dauerhaft bindet. Gegenüber dem konventionellen Verfahren des Lackierens hat diese Methode den Vorteil, dass sie technologisch einfacher ist und eine gleichmässige Dicke der Beschichtung an allen Stellen des dreidimensionalen Substrates gewährleistet.

Eine gewisse Schwierigkeit dieses Verfahrens ist die thermische Härtung des Lackes auf der Folie. Bei den hierfür benötigten Temperaturen (etwa 120-150°C) erweichen viele Folien und verlieren dabei ihre Form. Man kann deshalb nur Folien mit höherer Temperaturbeständigkeit verwenden, was aber wiederum beim späteren Schritt des Erwärmens der Folie bis zur Weichheit höhere Temperaturen benötigt.

Es wurde nunmehr gefunden, dass man das Aushärten des Lackes bei Raumtemperatur und in kurzer Zeit bewerkstelligen kann, wenn man als Lack einen strahlenhärtbaren Lack verwendet und diesen durch Bestrahlen auf der Folie teilweise oder vollständig härtet.

Die Erfindung besteht daher in einem Verfahren zum Aufbringen einer lackierten Folie auf einen dreidimensionalen Gegenstand aus festem Material, wobei die Folie zuerst auf einer Seite mit einem Lack beschichtet wird und auf der anderen Seite mit einem Klebstoff beschichtet wird und dann die Folie erwärmt wird und im warmen Zustand mit der mit Klebstoff versehenen Seite auf den Gegenstand aufgebracht wird, dadurch gekennzeichnet, dass als Lack ein strahlenhärtbarer Lack verwendet wird, der nach dem Aufbringen auf die Folie durch Bestrahlen in einen thermoplastischen Zustand übergeführt wird und während oder nach dem Aufbringen der Folie auf den Gegenstand thermisch vernetzt wird.

Das Bestrahlen kann dabei z.B. mit UV-Licht oder Elektronenstrahlen oder sichtbarem Licht geschehen. Vorzugsweise geschieht das Bestrahlen mit UV-Licht.

Als Folie verwendet man eine solche aus einem thermoplastischen Material, beispielsweise aus Polyethylen, Polypropylen, Polyvinylchlorid, Polyurethan, Polyester, Polyamid oder Polyethylenterephthalat. Die Dicke der Folie beträgt zweckmässig mindestens 20 µm. Die Folie kann pigmentiert sein, vorzugsweise ist sie transparent. Die Folie kann Stabilisatoren enthalten, z.B. Antioxidantien, Lichtschutzmittel, Verarbeitungshilfsmittel, Metalldesaktivatoren, Thiosynergisten, Phosphite oder Metallcarboxylate. Sie kann sonstige Zusätze enthalten, wie sie in Folien üblich sind, z.B. Füllstoffe, Gleitmittel, Antistatika oder Weichmacher. Die Folie kann oberflächenbehandelt sein, wie z.B. mittels eines Oxydationsmittels, mittels Flammenbehandlung oder mittels Coronaentladung. Dadurch wird eine bessere Haftung des Lackes und des Klebstoffes bewirkt. Die Folie kann durch Verstrecken in einer oder zwei Richtungen orientiert sein.

Der strahlenhärtbare Lack basiert auf einem Bindemittel das entweder radikalisch oder kationisch polymerisierbar ist oder sowohl radikalisch als auch kationisch polymerisierbar ist oder durch Säurekatalyse gehärtet werden kann. Meist besteht das Bindemittel aus einem Gemisch von strahlenhärtbaren Verbindungen, die nach demselben oder nach verschiedenen Mechanismen härtbar sind. Je nach dem Mechanismus, nach dem das Bindemittel härtbar ist, werden entsprechende Härtungskatalysatoren (= Photoinitiatoren) verwendet.

Die radikalisch polymerisierbaren Bindemittel sind ethylenisch ungesättigte Verbindungen. Es handelt sich dabei um einfach oder mehrfach ungesättigte Verbindungen, wobei die mehrfach ungesättigten Verbindungen von besonderer Bedeutung sind, da sie sich zu vernetzten - und damit unlöslichen - Produkten polymerisieren lassen.

Beispiele von einfach ungesättigten Verbindungen sind Acrylate oder Methacrylate von einwertigen Alkoholen, Acrylamide und ähnliche Acrylsäurederivate, wie z.B. Methyl-, Ethyl-, Butyl-, Isooctyl- oder Hydroxyethylacrylat, Methyl- oder Ethylmethacrylat, Acrylnitril, Acrylamid, N-Butyl(methacrylamid); sowie Vinyl- und Allylverbindungen wie z.B. Vinylacetat, Vinylstearat,N-Vinylpyrrolidon, Vinylidenchlorid, Vinylbenzol oder Allylacetat.

Beispiele mehrfach ungesättigter Verbindungen sind Acrylate, Methacrylate oder Itaconate von Polyolen wie z.B. Ethylenglykoldiacrylat, Diethylenglykol-dimethacrylat, Triethylenglykol-diacrylat, Butandiol-1,4-diacrylat, Propandiol-1,2-diacrylat, Butandiol-1,3-dimethacrylat, Neopentylglykol-diacrylat, Trimethylolpropan-di(meth)acrylat, Trimethylolethan-di(meth)acrylat, Glycerin-di- und -triacrylat, Pentaerythrit-di-, -tri- und tetraacrylat oder -methacrylat, Dipentaerythrit-tetra, -penta- und -hexaacrylat oder -methacrylat oder -itaconat, Sorbit-tetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamidopropoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Auch polymere oder oligomere mehrfach ungesättigte Verbindungen lassen sich unter Vernetzung photopolymerisieren wie z.B. ungesättigte Polyester und Copolyester der Maleinsäure und Fumarsäure, (Meth)acrylate von Polyvinylalkohol oder Homo- oder Copolymerisate von Butadien oder Isopren. Weitere verwendbare mehrfach ungesättigte Komponenten sind die Umsetzungsprodukte von Polyepoxiden mit Acryl- oder Methacrylsäuren. Als Polyepoxide werden dabei vorwiegend die im Handel erhältlichen Epoxidharz-Vorprodukte verwendet, die in verschiedenen Molekulargewichten erhältlich sind.

Meist werden zur Photopolymerisation Gemische solcher ungesättigter Verbindungen verwendet, um die Eigenschaften der Polymerisate für den gewünschten Verwendungszweck variieren zu können. Beispiele hierfür sind Gemische von Diacrylaten mit Polyester-acrylaten oder mit Polyurethanacrylaten, Gemische von Mono-, Di- und Triacrylaten, Gemische von ungesättigten Polyestern der Maleinsäure mit Styrol oder andere Gemische von polymer-oligomeren ungesättigten Verbindungen mit Di-, Tri- oder Tetraacrylaten. Die Gemische können aus zwei, drei oder auch mehreren ungesättigten Komponenten bestehen.

Als Photoinitiatoren für radikalisch polymerisierbare Bindemittel kommen vor allem aromatische Carbonylverbindungen in Frage. Beispiele sind Benzoin, Benzil, Benzophenon, die Benzoinalkylether, die Ester von Phenylglyoxylsäure, α-Trichloracetophenon, α-Diethoxyacetophenon, Benzildimethylketal, 1-Benzoylcyclohexanon, die α-Hydroxyacetophenone der DE-A 2 722 264, die α-Aminoacetphenone der EP-A 88 050, der EP-A 117 233 oder der EP-A 138 754, sowie die Aroylphosphinoxide der EP-A 7508 oder der EP-A 40 721. Diese Verbindungen sind sogenannte α-Spalter. Bei Bestrahlung zerfallen sie in radikalische Bruckstücke, welche die Polymerisation der ungesättigten Verbindungen auslösen. Sie werden oft auch in Kombination mit Aminen verwendet, wie z.B. Triethanolamin, N-Methyldiethanolamin, p-Dimethylaminobenzoesäureester oder Michlers Keton.

Zusammen mit den Photoinitiatoren können auch Sensibilisatoren verwendet werden, die das photohärtbare System für bestimmte Wellenlängenbereiche sensibilisieren. Beispiele hierfür sind Thioxanthon-, Anthracen- und Cumarinderivate.

Ferner können zusammen mit den Photoinitiatoren thermische Initiatoren verwendet werden, wie z.B. Benzoylperoxid, Cyclohexanonperoxid oder Methylethylketonperoxid.

Kationisch polymerisierbare Bindemittel sind bestimmte ethylenisch ungesättigte Verbindungen, wie z.B. Isobutylen, Styrol, N-Vinylpyrrolidon, Isopren, Butadien, Alkyl-vinylether oder Vinylester, oder heterocyclische Verbindungen, insbesondere 3- und 4-gliedrige Heterocyclen, wie z.B. Alkylenoxide, Epichlorhydrin, Glycidylether, Glycidylester, Epoxidharze, Oxetane, Dioxolane, Trioxan, Lactone, Thiirane, Thietane oder Azetidine.

Von besonderer Bedeutung als kationisch polymerisierbare Bindemittel sind die Epoxidharze, insbesondere die Di- und Polyepoxide und Epoxidharzpräpolymeren der zur Herstellung vernetzter Epoxiharze verwendeten Art. Die Di- und Polyepoxide können aliphatische, cycloaliphatische oder aromatische Verbindungen sein. Beispiele für solche Verbindungen sind die Glycidylether und β-Methylglycidylether aliphatischer oder cycloaliphatischer Diole oder Polyole, zum Beispiel solche des Ethylenglykols, Propan-1,2-diols, Propan-1,3-diols, Butan-1,4-diols, Diethylenglykols, Polyethylenglykols, Polypropylenglykols, Glycerins, Trimethylolpropans oder 1,4-Dimethylolcyclohexans oder des 2,2-Bis-(4-hydroxycyclohexyl)-propans und N,N-Bis-(2-hydroxyethyl)-anilins; die Glycidylether von Di- und Polyphenolen, beispielsweise Resorcin, 4,4′-Dihydroxydiphenylmethan, 4,4′-Dihydroxydiphenyl-2,2-propan, Novolake und 1,1,2,2-Tetrakis-(4-hydroxyphenyl)-ethan. Weitere Beispiele sind N-Glycidylverbindungen, z.B. die Diglycidylverbindungen des Ethylenharnstoffs, 1,3-Propylenharnstoffs oder 5-Dimethylhydantoins oder des 4,4′-Methylen-5,5′-tetramethyldihydantoins, oder solche wie Triglycidylisocyanurat.

Weitere Glycidylverbindungen mit technischer Bedeutung sind die Glycidylester von Carbonsäuren, insbesondere Di- und Polycarbonsäuren. Beispiele dafür sind die Glycidylester der Bernsteinsäure, Adipinsäure, Azelainsäure, Sebacinsäure, Phthalsäure, Terephthalsäure, Tetra- und Hexahydrophthalsäure, Isophthalsäure oder Trimellithsäure, oder von dimerisierten Fettsäuren.

Beispiele für von Glycidylverbindungen verschiedene Polyepoxide sind die Diepoxide des Vinylcyclohexens und Dicyclopentadiens, 3-(3′,4′-Epoxicyclohexyl)-8,9-epoxy-2,4-dioxaspiro[5.5]undecan, der 3′,4′-Epoxicyclohexylmethylester der 3,4-Epoxicyclohexancarbonsäure, Butadiendiepoxid oder Isoprendiepoxid, epoxidierte Linolsäurederivate oder epoxidiertes Polybutadien.

Als Photoinitiatoren für kationische härtbare Bindemittel kommen vor allem aromatische Sulfonium- und Iodoniumsalze in Frage, wie sie in den US-A 4 058 401, US 4 069 054 oder US-A 4 394 403 beschrieben sind. Weitere Initiatoren sind die Aren-cyclopentadienyl-eisen(II)-salze, wie sie in der EP-A 94 915 beschrieben sind.

Auch diese kationischen Photoinitiatoren können in Kombination mit einem Sensibilisator verwendet werden, wie dies in der EP-A 152 377 beschrieben ist. Durch Kombination mit Oxidationsmitteln, speziell mit peroxidischen Verbindungen, können die vorhin genannten Eisen-II-salze sowohl zur kationischen als auch zur radikalischen Photohärtung verwendet werden, wie dies in der EP-A 126 712 beschrieben ist.

Mit Hilfe der genannten Eisen-II-komplexsalze können auch Zweikomponenten-Polyurethane strahlengehärtet werden, wie dies in der EP-A 250 364 beschrieben ist. Die Polyurethane werden gebildet aus einem Polyol und einem Polyisocyanat. Als Polyol werden vorzugsweise hydroxylgruppenhaltige Acryl- oder Epoxidharze verwendet. Als Polyisocyanat können auch blockierte Polyisocyanate verwendet werden.

Durch Säurekatalyse härtbare Bindemittel können strahlungsgehärtet werden, wenn als Initiator eine Verbindung verwendet wird, die bei Bestrahlung eine Säure generiert. Solche sauer härtbare Bindemittel sind zum Beispiel bestimmte Alkydharze, Acrylharze, Polyesterharze, Melaminharze, Harnstoffharze, Phenolharze und deren Gemische, insbesondere die Gemische von Alkyd-, Acryl- und Polyesterharzen mit Melaminharzen. Insbesondere sind es veretherte Melaminharze, die für säurehärtbare Lacke verwendet werden. Die Polymerisation erfolgt bei diesen Harzen nicht durch Additionspolymerisation sondern durch Polykondensation. Als Photoinitiatoren für solche Systeme werden Verbindungen verwendet, die bei Bestrahlung eine Säure generieren. Beispiele hierfür sind Benzoinsulfonate, wie sie in der EP-A 84 515 oder EP-A 89 922 beschrieben sind, oder Oximsulfonate, wie sie in der EP-A 139 609 beschrieben sind.

Von besonderem Interesse als Bindemittel sind Hybrid-Systeme. Dies sind Gemische von radikalisch oder kationisch härtbaren und säurekatalysiert härtbaren Verbindungen, welche sowohl einen radikalischen oder kationischen Photoinitiator als auch einen säuregenerierenden Photoinitiator enthalten. Bei Bestrahlung solcher Hybrid-Systeme erfolgt zunächst nur die Polymerisation der radikalisch oder kationisch härtbaren Komponente sowie die Freisetzung der Säure aus dem Säurekatalysator. Beim anschliessenden Erwärmen des Systems erfolgt die Polykondensation der sauer härtbaren Komponente. Ein Beispiel hierfür sind Gemische von hydroxylgruppenhaltigen Acrylaten und Melaminharzen. In der ersten (radikalischen) Härtungsstufe entstehen lineare Polyacrylate, die in der zweiten (thermischen) Härtungsstufe durch das Melaminharz vernetzt werden.

Alle diese Arten von photohärtbaren Bindemitteln werden entweder mit einem Pigment gemischt oder man verwendet sie unpigmentiert als Klarlacke. Als Pigmente kommen alle üblichen anorganischen, organischen oder metallischen Pigmente in Frage.

Den Lacken können Lichtschutzmittel zugesetzt werden, wie z.B. UV-Absorber aus der Klasse der Benztriazole, Benzophenone oder Oxalanilide, insbesondere aber sterisch gehinderte Amine (HALS), wie z.B. Derivate von 2,2,6,6-Tetramethylpiperidin. Weitere Zusätze, die der Lack enthalten kann, sind Antioxidantien, Verlaufhilfsmittel, Haftvermittler oder Thixotropiemittel. Zum Auftrag kann der Lack mit Lösungsmitteln verdünnt werden, bevorzugt verwendet man jedoch einen lösungsmittelfreien Lack.

Der Lack wird auf die Oberseite der Folie in dünner Schicht aufgetragen. Hierzu können die für Lacke üblichen Auftragsverfahren verwendet werden, wie z.B. Streichen, Rakeln, Giessen, Extrudieren, Walzen oder Spritzen. Pulverlacke können elektrostatisch aufgebracht werden. Falls ein Lösungsmittel verwendet wurde, so lässt man dieses anschliessend an das Auftragen des Lackes weitgehend verdunsten. Dieses Antrocknen kann durch gelindes Erwärmen (z.B. durch Infrarotstrahlung) beschleunigt werden. Dann erfolgt die Bestrahlung des Lackes durch energiereiche Strahlungsquellen. Als solche kommen vor allem UV-Strahler in Frage, wie z.B. Quecksilberniederdruck-, -mitteldruck- oder -hochdrucklampen, Xenonlampen, Argonlampen, Metallhalogenidlampen.

Das Licht dieser Lampen ist reich an kurzwelligem Licht mit einer Wellenlänge von 200-600 nm. Auch Laserstrahlen sind geeignet und ebenso Elektronenstrahlen.

Der Lack kann auch zweischichtig appliziert werden. Beispielsweise kann zuerst ein pigmentierter Lack aufgetragen werden und darüber ein Klarlack, der ein Lichtschutzmittel enthält. Die Strahlenhärtung der zwei Lackschichten kann einzeln oder gemeinsam erfolgen.

Bei der Strahlenhärtung ist keine vollständige Aushärtung (Vernetzung) des Lackes erforderlich. Der Lack muss nur so weit gehärtet werden, dass er eine wischfeste Oberfläche hat. Bei dem später erfolgenden Erwärmen der Folie kann dann eine weitere Härtung erfolgen.

Der Lack wird nach dem Auftragen auf die Folie durch Bestrahlung in einen thermoplastischen Zustand übergeführt (Vorhärtung) und während oder nach dem Aufbringen der Folie auf den Gegenstand thermisch vernetzt (Nachhärtung). Die thermische Vernetzung erfolgt dabei vorzugsweise durch Erwärmen auf 100-160°C.

Die Unterseite der Folie wird mit einem Klebstoff beschichtet. Das kann vor oder nach dem Auftrag des Lackes geschehen. Der Klebstoff kann z.B. ein Schmelzkleber sein, der bei Normaltemperatur fest ist. Er kann aus Lösung oder aus der Schmelze auf die Folie aufgebracht werden und wird auf der Folie getrocknet oder erkalten gelassen.

Der Klebstoff kann auch ein Kontaktkleber sein, der bei Raumtemperatur weich und klebend ist. In diesem Fall wird nach dem Aufbringen des Klebstoffes (aus Lösung oder in Schmelze) eine antiadhesive Schutzfolie aufgebracht, die vor dem Aufbringen der Folie auf den dreidimensionalen Gegenstand abgezogen wird.

Es können auch Vorprodukte (Monomere, Oligomere) aufgebracht werden, aus denen durch Bestrahlung mit UV-Licht oder Elektronenstrahlen ein (polymerer) Klebstoff gebildet wird. Der Klebstoff kann daher auch ein strahlenhärtbares oder strahlenaktivierbares Material sein.

Die auf der Oberseite lackierte und auf der Unterseite mit Klebstoff beschichtete Folie wird vor dem Aufbringen auf den dreidimensionalen Gegenstand durch Erwärmen plastifiziert. Durch das Erwärmen kann auch der Klebstoff aktiviert werden und kann auch die Härtung des Lackes vervollständigt werden.

Die plastifizierte Folie wird auf den dreidimensionalen Gegenstand aufgebracht. Zur Erzielung einer festen Haftung kann die Folie durch Vakuum angesaugt werden, wie es im EP-A 251 546 beschrieben ist, oder sie wird durch Druck auf den Gegenstand gepresst, beispielsweise mit einer entsprechend geformten Presse. Die klebstoffbeschichtete Seite der Folie kann auch durch Einwirkung von Elektronenstrahlen mit dem Substrat verklebt werden.

Der zu überziehende Gegenstand kann aus beliebigem festem Material sein, insbesondere aus Metall, Kunststoff, Holz, Glas oder keramischem Material. Beispiele hierfür sind Karosserieteile von Fahrzeugen oder Verkleidungen von Haushaltsgeräten aus Metall oder Kunststoff oder Möbel bzw. Teile von Möbeln aus Holz.

Die folgenden Beispiele zeigen, wie das Verfahren im Detail ausgeführt werden kann. Darin bedeuten Teile Gewichtsteile und Prozente Gewichtsprozente, soweit nicht anders angegeben.

### Beispiel 1

Ein photohärtbarer Lack wird hergestellt durch Mischen von:

| | |
|---|---|
| 55 | Teilen eines Urethanacrylates (Ebecryl®284, UCB) |
| 14 | Teilen Hexandioldiacrylat |
| 14 | Teilen Trimethylolpropantriacrylat |
| 12 | Teilen Polyethylenglcoldiacrylat (Sartomer®344, ARCO) |
| 4 | Teilen eines radikalischen Photoinitiators (Irgacure®184, Ciba-Geigy) |

Der Lack wird in einem kontinuierlichen Prozess auf eine 200 µm dicke Folie aus thermoplastischem Polyester gegossen und bei einer Vorschubgeschwindigkeit von 10 m/min unter zwei quer zur Bahn angeordneten 80 W/cm Quecksilbermitteldrucklampen zu einem 30 µm dicken Film gehärtet. Die so lackierte Folie wird mit Hilfe von Umlenkrollen gewendet, so dass in einem nächsten Schritt ebenfalls durch Giessen ein Schmelzkleber auf die nicht lackierte Seite der Folie heiss aufgetragen werden kann. Nach Erkalten des Schmelzklebers wird die nunmehr beidseitig klebfreie Folie auf eine Rolle gewickelt und bis zu ihrer Weiterverwendung gelagert.

Die so behandelte Folie wird zum Beschichten eines metallischen Autokarosserieteils eingesetzt. Dabei wird zunächst ein ausreichend grosser Ausschnitt der Folie in einem Rahmen eingespannt und so über eine evakuierbare Kammer gelegt, dass die klebstoffbehandelte Seite der Folie und die zu beschichtende Seite des Autokarosserieteils, der sich in der Kammer befindet, sich gegenüberliegen. Anschliessend wird die Folie durch Heisslufterhitzen auf ca. 130°C plastifiziert, wobei auch der Klebstoff aktiviert, d.h. aufgeschmolzen wird. Die heisse Folie wird durch Absaugen der in der Kammer befindlichen Luft tiefgezogen und auf den Karosserieteil aufgebracht. Nach dem Abkühlen des Klebstoffes entsteht ein fester und dauerhafter Verbund aus lackierter Folie und Autokarosserieteil.

### Beispiel 2

Ein Hybridsystem wird hergestellt durch Mischen von:

| | |
|---|---|
| 40 | Teilen eines aliphatischen Urethanacrylates (Actilan®AJ 20, SNPE) |
| 40 | Teilen 2-Hydroxyethylacrylat |
| 20 | Teilen eines alkylierten Melaminharzes (Cymel®303, American Cyanamid) |
| 1 | Teil eines Silikondiacrylates (Ebecryl®350, UCB) |
| 2 | Teilen eines radikalischen Photoinitiators (Irgacure®184, Ciba-Geigy) |
| 2 | Teilen eines photodeblockierbaren Säurekatalysators (Benzointosylat) |

Der Lack wird in einem kontinuierlichen Prozess auf eine 200 µm dicke Folie aus Polyvinylchlorid gegossen und bei einer Vorschubgeschwindigkeit von 7 m/min unter zwei quer zur Bahn angeordneten 80 W/cm Quecksilbermitteldrucklampen zu einem 30 µm dicken thermoplastischen Film polymerisiert. Die so lackierte Folie wird mit Hilfe von Umlenkrollen gewendet, so dass in einem nächsten Schritt ebenfalls durch Giessen ein Schmelzkleber aufgetragen werden kann. Nach Erkalten des Schmelzklebers wird die nunmehr beidseitig klebfreie Folie auf eine Rolle gewickelt und bis zu ihrer Weiterverwendung gelagert.

Die so behandelte Folie wird zum Beschichten eines metallischen Autokarosserieteils eingesetzt. Dabei wird zunächst ein ausreichend grosser Ausschnitt der Folie in einem Rahmen eingespannt und so über eine evakuierbare Kammer gelegt, dass die klebstoffbehandelte Seite der Folie und die zu beschichtende Seite des Autokarosserieteils, der sich in der Kammer befindet, sich gegenüberliegen. Anschliessend wird die Folie durch Heisslufterhitzen auf ca. 150°C plastifiziert, wobei der Klebstoff aktiviert, d.h. aufgeschmolzen wird. Die heisse Folie wird durch Absaugen der in der Kammer befindlichen Luft tiefgezogen und auf den Karosserieteil aufgebracht. Anschliessend wird der folienbeschichtete Karosserieteil mit ca. 150°C heisser Luft während 10 Minuten weitererhitzt, wobei durch die Wirkung des während der UV-Bestrahlung freigesetzten Säurekatalysators eine räumliche Vernetzung und somit vollständige Aushärtung des Lackfilmes stattfindet. Nach dem Abkühlen des Klebstoffes entsteht ein fester und dauerhafter Verbund aus lackierter Folie und Autokarosserieteil. Ein während 10 Minuten bei 150°C gehärteter Lack wies eine Pendelhärte nach Koenig von 130 Sekunden auf (gemessen auf Glas).

## Patentansprüche

1. Verfahren zum Aufbringen einer lackierten Folie auf einen dreidimensionalen Gegenstand aus festem Material, wobei die Folie zuerst auf einer Seite mit einem Lack beschichtet wird und auf der anderen Seite mit einem Klebstoff beschichtet wird und dann die Folie erwärmt wird und im warmen Zustand mit der mit Klebstoff versehenen Seite auf den Gegenstand aufgebracht wird, dadurch gekennzeichnet, dass als Lack ein strahlenhärtbarer Lack verwendet wird, der nach dem Aufbringen auf die Folie durch Bestrahlen in einen thermoplastischen Zustand übergeführt wird und während oder nach dem Aufbringen der Folie auf den Gegenstand thermisch vernetzt wird.

2. Verfahren gemäss Anspruch 1, dadurch gekennzeichnet, dass das Bestrahlen mit UV-Licht oder Elektronenstrahlen oder sichtbarem Licht geschieht.

3. Verfahren gemäss Anspruch 2, dadurch gekennzeichnet, dass das Bestrahlen mit UV-Licht geschieht.

4. Verfahren gemäss Anspruch 1, dadurch gekennzeichnet, dass der Lack auf einem radikalisch polymerisierbaren Bindemittel basiert.

5. Verfahren gemäss Anspruch 1, dadurch gekennzeichnet, dass der Lack auf einem kationisch polymerisierbaren Bindemittel basiert.

6. Verfahren gemäss Anspruch 1, dadurch gekennzeichnet, dass der Lack auf einem säurehärtbaren Bindemittel basiert.

7. Verfahren gemäss Anspruch 1, dadurch gekennzeichnet, dass der Lack in zwei Schichten appliziert wird.

8. Verfahren gemäss Anspruch 1, dadurch gekennzeichnet, dass der Lack mindestens einen Photoinitiator enthält.

9. Verfahren gemäss Anspruch 1, dadurch gekennzeichnet, dass der Lack ein Lichtschutzmittel enthält.

10. Verfahren gemäss Anspruch 1, dadurch gekennzeichnet, dass die thermische Vernetzung bei 100-160°C geschieht.

11. Verfahren gemäss Anspruch 1, dadurch gekennzeichnet, dass der dreidimensionale Gegenstand aus Metall, Kunststoff, Holz, Glas oder keramischem Material ist.

12. Verfahren gemäss Anspruch 11, dadurch gekennzeichnet, dass der Gegenstand ein Teil einer Fahrzeugkarosserie ist und aus Metall oder Kunststoff besteht.

13. Verfahren gemäss Anspruch 1, dadurch gekennzeichnet, dass der Klebstoff ein strahlenhärtbares oder strahlenaktivierbares Material ist.

## Claims

1. A method of applying a painted film to a three-dimensional article of solid material, in which the film is first coated on one side with a paint and on the other side with an adhesive, and then the film is heated and is applied, while hot, with the adhesive-coated side to the article, wherein the paint used is a radiation-curable paint which, after application to the film, is transformed by irradiation into a thermoplastic state and, during or after application of the film to the article, is thermally crosslinked.

2. A method according to claim 1, wherein irradiation is effected with UV light or electron beams or with visible light.

3. A method according to claim 2, wherein irradiation is effected with UV light.

4. A method according to claim 1, wherein the paint is based on a free-radically polymerisable binder.

5. A method according to claim 1, wherein the paint is based on a cationically polymerisable binder.

6. A method according to claim 1, wherein the paint is based on an acid-curable binder.

7. A method according to claim 1, wherein the paint is applied in two layers.

8. A method according to claim 1, wherein the paint contains at least one photoinitiator.

9. A method according to claim 1, wherein the paint contains a light stabiliser.

10. A method according to claim 1, wherein the thermal crosslinking is effected at 100-160°C.

11. A method according to claim 1, wherein the three-dimensional article is of metal, plastic, wood, glass or ceramic material.

12. A method according to claim 11, wherein the article is an automobile body part and consists of metal or plastic.

13. A method according to claim 1, wherein the adhesive is a material which can be cured or activated by radiation.

## Revendications

1. Procédé pour l'application d'une feuille vernie sur un objet tridimensionnel en matière solide, en revêtant la feuille d'abord sur une face d'un vernis et sur l'autre face d'une colle et en chauffant la feuille ensuite, puis en déposant à l'état chaud par le côté pourvu de colle sur l'objet, caractérisé en ce qu'on utilise en tant que vernis un vernis durcissable par irradiation que l'on transforme après application de la feuille par irradiation en un état thermoplastique et que l'on réticule thermiquement au cours ou après le dépôt de la feuille sur l'objet.

2. Procédé selon la revendication 1, caractérisé en ce que l'on effectue l'irradiation par la lumière UV ou par le faisceau d'électrons ou par la lumière visible.

3. Procédé selon la revendication 2, caractérisé en ce que l'on effectue l'irradiation à l'aide de la lumière UV.

4. Procédé selon la revendication 1, caractérisé en ce que le vernis est à base d'un agent liant polymérisable radicalairement.

5. Procédé selon la revendication 1, caractérisé en ce que le vernis est à base d'un agent liant polymérisable cationiquement.

6. Procédé selon la revendication 1, caractérisé en ce que le vernis est à base d'un agent liant durcissable par catalyse acide.

7. Procédé selon la revendication 1, caractérisé en ce que l'on applique le vernis en deux couches.

8. Procédé selon la revendication 1, caractérisé en ce que le vernis contient au moins un photo-amorceur.

9. Procédé selon la revendication 1, caractérisé en ce que le vernis contient un agent photoprotecteur.

10. Procédé selon la revendication 1, caractérisé en ce que l'on effectue la réticulation thermique à 100 à 160 °C.

11. Procédé selon la revendication 1, caractérisé en ce que l'objet tridimensionnel est en métal, en matière plastique, en bois, en verre ou en matière céramique.

12. Procédé selon la revendication 11, caractérisé en ce que l'objet est une pièce de carrosserie d'automobile et qu'il est en métal ou en matière plastique.

13. Procédé selon la revendication 1, caractérisé en ce que l'adhésif est une matière durcissable par irradiation ou activable par irradiation.
